# EUROPÄISCHE PATENTSCHRIFT

(11) **EP 4 269 141 B1**
(45) Veröffentlichungstag und Bekanntmachung des Hinweises auf die Patenterteilung: **27.05.2026**
(21) Anmeldenummer: 23169245.0
(22) Anmeldetag: 21.04.2023
(51) Int. Cl.: B60H 1/24, B60H 1/34

(54) **LUFTAUSSTRÖMER FÜR EIN FAHRZEUG**
AIR VENT FOR A VEHICLE
DIFFUSEUR D'AIR POUR UN VÉHICULE

(30) Priorität: 27.04.2022 DE 102022110218
(43) Veröffentlichungstag der Anmeldung: 01.11.2023
(73) Patentinhaber: GRAMMER AG, 92289 Ursensollen (DE)
(72) Erfinder: Grüdl, Alexander, 96358 Teuschnitz (DE)
(74) Vertreter: Roche, von Westernhagen & Ehresmann

(56) Entgegenhaltungen:
- EP-A1- 3 812 184
- DE-A1- 102017 113 906
- DE-A1- 102018 115 944
- DE-B3- 102013 210 055

## Beschreibung

Die Erfindung betrifft einen Luftausströmer für ein Fahrzeug. Im Sinne der Erfindung ist ein Fahrzeug z.B. ein Land-, Luft- oder Wasserfahrzeug.

Derartige Luftausströmer können in unterschiedlichen Bereichen des Fahrzeuginnenraums angeordnet sein, um einen Luftstrom in bestimmte Richtungen zu lenken oder nur an den Fahrzeuginnenraum abzugeben. Beispielsweise befinden sich in der Regel solche Luftausströmer im Armaturenbrett, der Innenverkleidung oder in der Mittelkonsole, so dass die Luft dem oberen vorderen oder hinteren Bereich des Fahrzeuginnenraums, den Scheiben oder dem Fußraum zugeleitet werden kann.

Die DE 10 2017 113 906 A1 betrifft einen Luftausströmer mit einem Strömungskanal, in welchem ein Luftleitelement angeordnet ist, welches den Kanal teilt und zwei Luftauslässe bildet. Mittels einer um eine gehäusefeste Drehachse drehbaren Absperrwand kann der Luftstrom jedem der beiden Luftauslässe zugeführt werden, während der andere Luftauslass wenigstens teilweise verschlossen ist, beiden Luftauslässen zugeführt werden oder völlig versperrt werden.

Der Luftausströmer gemäß EP 3 812 184 A1 umfasst ein Gehäuse mit einem Lufteinlass sowie einem Luftauslass. In einem Strömungskanal des Lufteinlasses ist eine um eine feststehende Drehachse drehbare Wand angeordnet, mit welcher der Luftstrom ganz oder teilweise absperrbar ist. Auf diese Weise kann der Luftstrom auch Bereichen des Luftauslasses zugeführt werden.

In DE 10 2018 115 944 A1 ist ein Luftausströmer für ein Fahrzeug offenbart, welcher ein Gehäuse mit einer Eintrittsöffnung und einer Austrittsöffnung umfasst. Eine Gehäusewand des Gehäuses begrenzt einen Luftkanal, in welchem von der Eintrittsöffnung zu der Austrittsöffnung entlang einer Hauptstromrichtung Luft strömen kann. Die Gehäusewand bildet im Bereich der Austrittsöffnung mindestens einen unter einem Winkel in den Luftkanal ragenden Vorsprung aus, so dass sich die Querschnittsfläche des Luftkanals in Hauptstromrichtung verkleinert, wobei ein Luftleitelement in dem Luftkanal angeordnet ist, welches zwischen zwei Endstellungen verstellbar ist und dazu ausgebildet ist, zumindest in einer der Endstellungen die durch den Luftkanal strömende Luft von der Hauptstromrichtung in Richtung des mindestens einen Vorsprungs zu richten. Das Luftleitelement ist um einen festen Drehpunkt schwenkbar.

Der Luftausströmer gemäß DE 10 2013 210 055 B3 umfasst ein Gehäuse, mit einer in axialer Richtung zum Gehäuse befindlichen Lufteintrittsöffnung und einer der Lufteintrittsöffnung gegenüberliegenden Luftaustrittsöffnung. In dem Gehäuse befindet sich ein Luftleitelement mit einer ersten Luftleitfläche und einer der ersten Luftleitfläche gegenüberliegenden zweiten Luftleitfläche, die zur ersten Luftleitfläche symmetrisch ist. In dem Gehäuse sind ein erster Luftkanal ein zweiter Luftkanal gebildet. Der erste Luftkanal ist zum Transport eines ersten Volumenstroms und der zweite Luftkanal zum Transport eines zweiten Volumenstroms ausgebildet. Ein Flügel ist an dem der Lufteintrittsöffnung zugewandten Ende des Luftleitelements beweglich angeordnet, derart, dass aufgrund der Stellung des ersten Flügels das Verhältnis von erstem Volumenstrom zu zweitem Volumenstrom einstellbar ist.

Aus offenkundiger Vorbenutzung sind Luftausströmer bekannt, die an dem Luftauslass eine Lamellenstruktur mit mehreren Lamellen aufweisen, die in unterschiedliche Richtungen verstellbar sind und in eine Schließstellung bewegbar sind. Die Verstellung erfolgt in der Regel manuell von dem Sitzinsassen. Die Lamellen sind von außen sichtbar. Der Luftauslass musste eine entsprechende Größe aufweisen, damit die Lamellenstruktur in den Luftauslass intergriert werden konnte. Der Luftauslass wurde z.B. optisch an das Design des Fahrzeuginnenraums angepasst, er beeinträchtigte aber die freie Gestaltung des Fahrzeuginnenraums.

Es war Aufgabe der Erfindung, einen Luftausströmer für ein Fahrzeug zu schaffen, welcher die Luft gerichtet aus wenigstens einem Luftauslass abgeben kann. Außerdem war es Aufgabe der Erfindung den Luftausströmer derart auszubilden, dass er die Gestaltung des Fahrzeuginnenraums möglichst wenig beeinträchtigt.

Die Aufgabe wird gelöst durch einen Luftausströmer mit den Merkmalen des Anspruchs 1. Vorteilhafte Ausgestaltungen der Erfindung ergeben sich aus den Unteransprüchen.

Der erfindungsgemäße Luftausströmer umfasst einen Zuführkanal über welchen Luft zuführbar ist. Der Zuführkanal ist z.B. von einem Ansatz gebildet, welcher mit einer Luftzuführung, z.B. einem Schlauch verbindbar ist. Der Zuführkanal kann im Sinne der Erfindung auch eine bloße Öffnung einer Kammer des Luftausströmers bilden.

Der Kammer ist über den Zuführkanal ein Luftstrom zuleitbar. Zudem wird wenigstens ein Luftstrom aus der Kammer herausgeleitet. Die Kammer ist dafür vorgesehen, den Luftstrom zu wenigstens einem Luftauslass zu leiten, den Luftstrom aufzuteilen und ggf. den Luftstrom zu sperren. Wenigstens die Kammer ist z.B. von einem Gehäuse, z.B. einem Kunststoffgehäuse gebildet. Auch wenn es auf das Material der Kammer nicht ankommt, ist mit einem Kunststoffgehäuse leicht eine gewünscht Form der Kammer realisierbar. Der Luftausströmer umfasst wenigstens einen Luftauslass über welchen die Luft aus der Kammer in den Fahrzeuginnenraum strömen kann.

In der Kammer ist wenigstens eine bewegbare Trennwand vorgesehen, welche mittels einer Verstellvorrichtung in unterschiedlichen Positionen anordenbar ist, derart, dass der Luftstrom unterschiedlich geleitet, geteilt und blockiert werden kann. Z.B. weist der Luftausströmer lediglich einen Luftauslass auf. Dieser kann dann von der Trennwand freigegebenwerden, so dass der Luftstrom aus dem Luftauslass ausströmen kann oder versperrt werden kann, so dass kein Luftstrom den Auslass passieren kann.

Z.B. umfasst der Luftausströmer wenigsten einen ersten Luftauslass und einen zweiten Luftauslass. Beispielsweise kann die Trennwand derart angeordnet werden, dass der Luftstrom dem ersten Luftauslass zuführbar ist, während der zweite Luftauslass von der Trennwand versperrt ist. Gemäß einer weiteren Anordnung der Trennwand ist z.B. der Luftstrom dem zweiten Luftauslass zuführbar, während der erste Luftauslass von der Trennwand versperrt ist. Eine andere Stellung der Trennwand sieht z.B. vor, den Luftstrom dem ersten Luftauslass und dem zweiten Luftauslass zuzuführen.

Ein Vorteil des erfindungsgemäßen Luftausströmers besteht darin, dass eine Änderung der Ausströmrichtung durch die Wahl des oder der jeweiligen Luftauslässe erfolgt, durch welche der Luftstrom austritt. Auf diese weise verändert sich der wenigstens eine Luftauslass optisch nicht. Das Design des Fahrzeuginnenraums wird optisch nicht durch die unterschiedlichen Stellungen von Auslasslamellen beeinträchtigt. Die Luftauslässe können z.B. als schmale Schlitze ausgebildet sein und auf diese Weise dem Insassen nicht auffallen. Es können mehrere solcher Luftausströmer in die Instrumententafel oder in eine Verkleidung oder eine Konsole integriert werden.

Ein Drehpunkt der Trennwand ist auf einer Kreisbahn geführt. Von dem Drehpunkt beabstandete Punkte, insbesondere Endbereiche der Trennwand bewegen sich z.B. auf einer Hypozykloiden oder einer Epizykloiden. Während sich der Drehpunkt der Trennwand, insbesondere der Mittelpunkt der Trennwand, auf einer Kreisbahn bewegt, wird die Trennwand gedreht. Auf diese Weise können die unterschiedlichen Stellungen der Trennwand vorteilhaft in einer entsprechend ausgebildeten Kammer realisiert werden.

Z.B. ist die Trennwand zusätzlich zu den bereits oben beschriebenen Stellungen derart anordenbar, dass der Strömungsquerschnitt verschlossen ist. Ist der Strömungsquerschnitt z.B. im Wesentlichen verschlossen, kann kein Luftstrom oder lediglich ein sehr geringer Luftstrom durch die Kammer hindurchströmen. Endbereiche der Trennwand sind in diesem Fall z.B. eng an eine die Kammer begrenzenden Innenwand heranbewegt, so dass der gesamte Strömungsquerschnitt von der Trennwand abgedeckt wird. Z.B. könnten an den Endbereichen der Trennwand elastisch verformbare Lippen angeordnet sein, die in Kontakt mit der Innenwand bewegbar sind. Die Lippen können mit der Innenwand der Kammer in Kontakt geraten und sich elastisch verformen. Damit kann eine noch bessere Dichtwirkung erzielt werden.

Zwischen einer ersten Öffnung und einer zweiten Öffnung der Kammer zu dem Fahrzeuginnenraum ist z.B. wenigstens eine Blende angeordnet. Die Blende bildet z.B. wenigstens teilweise einen Luftauslassbereich des Luftauslasses. Jedem Luftauslass ist z.B. eine definierte Abströmrichtung zugeordnet. Die Abströmrichtung kann z.B. durch die Form der Laibung des jeweiligen Luftauslasses definiert sein. Dabei ist z.B. die Laibung wenigstens teilweise von der Blende gebildet.

In die Blende sind z.B. Funktionselemente integriert, wie z.B. Bedienelemente, Beleuchtungselemente, Displays usw. Der von der Blende in Anspruch genommene Raum kann so genutzt werden.

Die Blende ist z.B. als dekoratives Element gestaltet. Die Blende kann dann vollständig das dekorative Element bilden oder einen Teil eines dekorativen Elements bilden.

Die Trennwand ist z.B. flügelartig geformt. Auf diese Weise kann sie gut angeströmt und umströmt werden. Die flügelförmige Trennwand hat ein geringes Gewicht und kann leicht bewegt werden. Sie nimmt selbst wenig Raum innerhalb der Kammer ein.

Wenn die Trennwand flügelartig geformt ist, aber auch im Falle anderer Formen, kann die Blende z.B. als Extrusionsteil ausgebildet sein. Das ermöglicht eine kostengünstige Herstellung.

Die Laibung wenigstens eines Luftauslasses ist z.B. von der Blende und einer die Kammer begrenzenden Wand gebildet. Die Form der Laibung beeinflusst z.B. die Ausströmrichtung des Luftstroms. Die Wand der Kammer kann z.B. benachbart der Laibung derart ausgebildet sein, dass der Luftstrom in die gewünschte Austrittsrichtung gelenkt wird. Alternativ kann der Luftauslass auch lediglich von einer Gehäusewand des Luftausströmers oder lediglich von der Blende gebildet sein.

Die Laibung des Luftauslasses ist Z.B. derart geformt sind, dass der Luftstrom in eine definierte Richtung gelenkt wird. Die Luftaustrittsrichtung des jeweiligen Luftauslasses ist konstant. Es kann aber eine Überlagerung der Luftströme der jeweiligen Luftauslässe stattfinden. So können sich z.B. die Luftströme eines ersten nach schräg unten gerichteten Luftauslasses sowie eines zweiten nach schräg oben gerichteten Luftauslasses zu einem horizontal gerichteten Luftstrom überlagern.

Bei Zwischenstellungen der Trennwand, in welcher z.B. die Trennwand derart positioniert ist, dass Teilströme des Luftstroms aus einem ersten Luftauslass und aus einem zweiten Luftauslass austreten, können die Luftströme unterschiedlich sein. Z.B. tritt aus einem Luftauslass, welcher den Luftstrom nach unten richtet, ein größerer Luftstrom aus in Bezug auf einen Luftauslass, bei welchem der Luftstrom nach oben gerichtet ist. Gemäß einer alternativen Anordnung der Trennwand tritt z.B. aus dem Luftauslass, welcher den Luftstrom nach oben richtet ein größerer Luftstrom aus.

Die Verstellvorrichtung des Luftausströmers weist z.B. einen Antrieb auf. Der Antrieb dient der Bewegung der Trennwand. Der Antrieb ist z.B. als Elektroantrieb ausgebildet. Alternativ kann die Trennwand aber auch manuell bewegbar sein. Bei einem Elektroantrieb besteht die Möglichkeit bestimmte Positionen der Trennwand gezielt einzustellen oder z.B. die Trennwand regelmäßig, z.B. oszillierend zu bewegen.

Der Antrieb umfasst z.B. ein Getriebe. Das Getriebe ist z.B. ein Zahnradgetriebe. Die Bewegung des Antriebs kann damit z.B. auf unterschiedliche Drehzahl gebracht und z.B. mit bestimmter Bewegungscharakteristik versehen werden. Bewegt sich ein Drehpunkt der Trennwand auf einer Kreisbahn, kann das Getriebe von einem Hohlradgetriebe oder einem Getriebe mit Sonnenrad und Planetenrädern gebildet sein.

Ist z.B. das Getriebe von einem Hohlradgetriebe gebildet, kann die Trennwand in unterschiedliche Positionen innerhalb der Kammer bewegt werden, wobei die Trennwand gedreht und translatorisch verlagert wird. Auf diese Weise sind verschiedene Strömungswege innerhalb der Kammer definierbar und der geamte Strömungsquerschnitt kann ggf. versperrt werden.

Mittels der Trennwand ist die Kammer z.B. derart unterteilbar, dass wenigstens ein Luftauslass versperrt ist, während der Luftstrom wenigstens einem anderen Luftauslass zugeleitet wird. Z.B. weist der Luftausströmer einen ersten Luftauslass und einen zweiten Luftauslass auf. Mit der Trennwand kann z.B. in einer ersten Position der gesamte Luftstrom durch den ersten Luftauslass strömen, während der zweite Luftauslass versperrt ist. In einer zweiten Position der Trennwand strömt der gesamte Luftstrom durch den zweiten Luftauslass, während der erste Luftauslass versperrt ist.

Zusätzlich kann die Trennwand z.B. in eine Position bewegbar sein, in welcher der Luftstrom geteilt wird und ein erster Teilstrom des Luftstroms durch den ersten Luftauslass und ein zweiter Teilstrom durch den zweiten Luftauslass strömt.

Wie bereits oben erwähnt, ist z.B. wenigstens ein Luftauslass derart geformt, dass der Luftstrom beim Austritt aus dem Luftausströmer in eine bestimmte Richtung geleitet wird. Als Luftauslass wird im Sinne der Erfindung ein Bereich des Luftausströmers bezeichnet, welcher eine Öffnung bildet über welche der zugeführte Luftstrom oder ein Teil dieses Luftstroms aus dem Luftausströmer an den Fahrzeuginnenraum abgebbar ist. Zu dem Luftauslass gehört z.B. ein der Laibung der Öffnung benachbarter Bereich stromaufwärts der Laibung. Dieser Bereich kann bereits die Ausströmrichtung beeinflussen.

Ein erster Luftauslass ist z.B. derart geformt, dass der Luftstrom nach unten geleitet wird. Luft, die aus dem Luftauslass strömt, hat somit grundsätzlich eine Strömungsrichtung, die nach unten gerichtet ist. Nach unten bedeutet in diesem Sinne, dass die Ausströmrichtung wenigstens einen Anteil nach unten aufweist. Z.B. kann die Luft nach schräg unten strömen.

Ein zweiter Luftauslass ist z.B. derart geformt, dass der Luftstrom nach oben geleitet wird. Nach oben bedeutet in diesem Sinne, dass die Ausströmrichtung wenigstens einen Anteil nach oben aufweist. Z.B. kann die Luft nach schräg oben strömen.

Zwei Luftauslässe mit unterschiedlicher Ausströmrichtung sind z.B. derart angeordnet und geformt, dass sich die austretenden Luftströme zu einer dritten Ausströmrichtung überlagern. Wird z.B. der Luftstrom einem ersten Luftauslass mit Ausströmrichtung nach schräg oben und dem zweiten Luftauslass mit Ausströmrichtung nach schräg unten zugeleitet, überlagern sich die aufeinandertreffenden Luftströme zu einem Luftstrom, welcher nach vorne gerichtetet ist.

Gemäß einer Ausführungsform ist zusätzlich zu der Trennwand wenigstens eine Leitwand unbewegbar oder bewegbar in der Kammer geführt. Diese Leitwand ist z.B. derart angeordnet, dass wenigstens ein Teil des Luftstrom relativ zu einer Hauptströmungsrichtung seitlich abgelenkt wird. Die Leitwand ist z.B. an der Trennwand befestigt. Z.B. bildet die Leitwand einen Winkel von 45° mit der Trennwand. Ein Teil des Luftstroms kann auf diese Weise auch seitlich abgelenkt und bestimmten Bereichen des Luftauslasses zugeführt werden.

Die Trennwand ist z.B. zu jeder von zwei rechtwinklig aufeinander stehenden Mittelpunktsachsen symmetrisch ausgebildet. Der Mittelpunkt kann z.B. der Drehpunkt sein. Die Trennwand kann dann beidseitig gleichmäßig von dem Luftstrom umströmt werden. Sie kann eine konvexe Form aufweisen, welche sich zu gegenüberliegenden Endbereichen verjüngt.

Die Trennwand kann alternativ aber auch andere Profile aufweisen, wie z.B. asymmetrische Tragflächenprofile, lineare, kurvenförmige oder bikonkave Profile. Durch das Profil der Trennwand kann der aus dem Ausströmer abgegebene Luftstrom wesentlich mitbeeinflusst werden und so z.B. eine bessere Ablenkung in eine bestimmte Richtung hervorrufen.

Die Erfindung betrifft gemäß einem zweiten Aspekt der Erfindung einen Fahrzeuginnenraum, wobei wenigstens ein Bereich der Verkleidung des Innenraums und / oder einer Konsole mit wenigstens einem Luftausströmer nach dem ersten Erfindungsaspekt versehen ist. Verkleidungen sind z.B. im Sinne der Erfindung die Instrumententafel, Abdeckungen der Sitze, Abdeckungen an Bereichen einer Konsole oder an Seitenbereichen des Innenraums.

Bezüglich der Vorteile der Erfindung wird, um Wiederholungen zu vermeiden, auf den ersten Aspekt der Erfindung verwiesen.

Z.B. sind wenigstens zwei Luftausströmer derart angeordnet, dass ihre Luftauslässe miteinander fluchten. Auf diese Weise kann der Luftausströmer optisch unauffällig in Designlinien des Fahrzeugs integriert sein. Designlinien, welche auf einer Verkleidung in dem Fahrzeuginnenraum angeordnet sind, entsprechen in diesem Fall z.B. dem Design des Luftaustritts.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Die schematischen Figuren zeigen:
- Fig. 1: eine perspektivische Ansicht einer Instrumententafel im vorderen Bereich des Fahrrgastraums,
- Fig. 2: eine Schnittansicht des erfindungsgemäßen Luftausströmers, wobei die Trennwand in einer ersten Position angeordnet ist,
- Fig. 3: der Luftausströmer in Anlehnung an Fig. 2, wobei die Trennwand in einer zweiten Position angeordnet ist,
- Fig. 4: der Luftausströmer in Anlehnung an Fig. 2, wobei die Trennwand in einer dritten Position angeordnet ist,
- Fig. 5: der Luftausströmer in Anlehnung an Fig. 2, wobei die Trennwand in einer vierten Position angeordnet ist,
- Fig. 6: eine Draufsicht auf den Luftausströmer,
- Fig. 7: eine Schnittansicht gemäß Schnittlinie A - A in Fig. 6,
- Fig. 8: eine Schnittansicht gemäß Schnittlinie B - B in Fig. 6.

Der Luftausströmer insgesamt ist in den Fig. mit dem Bezugszeichen 10 bezeichnet.

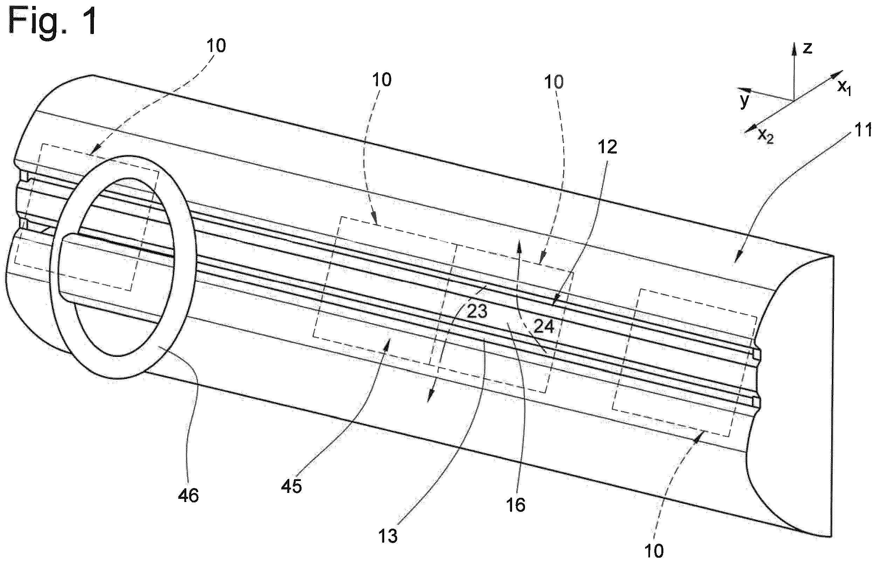

In Fig. 1 ist eine Instrumententafel 11 eines Fahrzeugs mit einem schematisch dargestellten Lenkrad 46 zu erkennen, die mit mehreren erfindungsgemäßen Luftausströmern 10 versehen ist. Die Anordnung der Luftausströmer 10 ist jeweils durch eine gestrichelte Linie angedeutet. Alle Luftausströmer weisen den gleichen Aufbau auf. Es ist daher nachfolgend lediglich ein Luftausströmer 10 beschrieben. Optisch ist ein Sichtbereich 45 des Luftausströmers 10 an das Design benachbarter Bereiche der Instrumententafel 11 angepasst. Mit anderen Worten, der Luftausströmer fällt dem Fahrzeuginsassen nicht auf, da er sich nicht von dem Design benachbarter Bereiche unterscheidet.

Der Luftausströmer 10 umfasst einen oberen schlitzartigen Luftauslass 12 sowie einen unteren schlitzartigen Luftauslass 13. Die Luftauslässe 12 und 13 verlaufen parallel etwa horizontal. Die Luftauslässe 12 und 13 der einzelnen Luftausströmer 10 fluchten jeweils miteinander.

Die Luftauslässe 12 und 13 sind statisch in die Instrumententafel 11 integriert. Der obere Luftauslass 12 ist z.B. derart ausgebildet, dass die Luft schräg nach unten abströmt (siehe Abströmrichtung 23). Der untere Luftauslass 13 ist z.B. derart ausgebildet, dass die Luft schräg nach oben ausströmt (siehe Abströmrichtung 24). Die maximale Abströmrichtung des jeweiligen Luftauslasses 12 oder 13 ist aufgrund der Form der Luftauslässe sowie angrenzender Flächenteile der Instrumententafel 11 vorgegeben. Es kann aber z.B. für jeden Luftausströmer 10 separat oder z.B. für mehrere Luftausströmer 10 gemeinsam darauf Einfluss genommen werden, ob der Luftstrom aus einem der Luftauslässe 12 oder 13, aus beiden Luftauslässen 12 und 13 oder ob kein Luftstrom aus dem Luftausströmer 10 austritt.

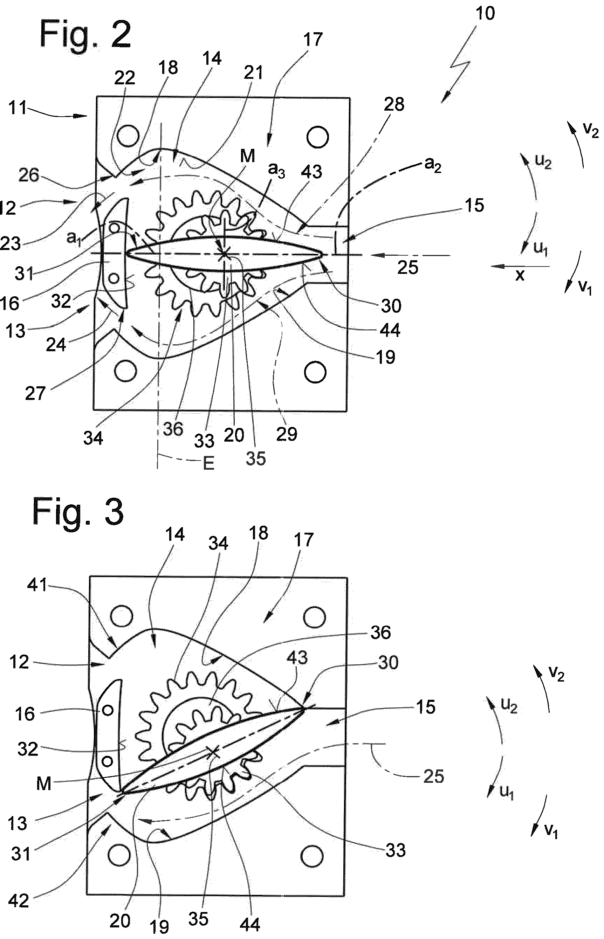

In Fig. 2 ist ein Längsschnitt durch den Luftausströmer 10 gezeigt. Er umfasst ein Gehäuse 17, in welchem eine Kammer 14 ausgebildet ist. Der Luftstrom 25 strömt in Richtung x durch einen Lufteinlass 15 in die Kammer 14. Die Kammer 14 ist von einem oberen Bereich 18, einem unteren Bereich 19 sowie von Seitenbereichen 22 einer Innenwand 21 begrenzt, wobei in den Fig. lediglich einer der Seitenbereiche 22 erkennbar ist.

Die Kammer 14 hat eine bauchige Form. Von dem Lufteinlass 15 weitet sich die Kammer 14 mit zunehmender x-Richtung bezüglich der z-Richtung bis zu einer Ebene E auf und verjüngt sich dann wieder. Damit wird dem Luftstrom 25 eine bestimmte Strömungsrichtung induziert.

Die Kammer 14 wird von dem Luftstrom 25 durchströmt und dieser zu einem der Luftauslässe 12 oder 13 geleitet. Der Luftstrom 25 kann auch in der Kammer 14 geteilt werden, so dass ein erster Teilstrom 28 des Luftstroms 25 durch den Luftauslass 12 und ein zweiter Teilstrom 29 des Luftstroms 25 durch den Luftauslass 13 ausströmt.

Ein oberer Endbereich einer Blende 16 bildet zusammen mit dem Gehäuse 17 eine Laibung 26 des Luftlasses 12 und ein unterer Endbereich der Blende 16 bildet zusammen mit dem Gehäuse 17 eine Laibung 27 des Luftauslasses 13.

In der Kammer 14 ist eine Trennwand 20 mit einer ersten Seitenfläche 43 sowie einer zweiten Seitenfläche 44 bewegbar gelagert. Die Trennwand 20 hat eine strömungsgünstige flügelförmige konvexe Gestalt mit Endbereichen 30 und 31. Die Trennwand 20 ist symmetrisch zu einer Achse a1 sowie zu einer Achse a3, die senkrecht auf der Achse a1 steht. Die Achsen a1 und a3 verlaufen durch einen Mittelpunkt M.

In Fig. 2 ist die Trennwand 20 derart angeordnet, dass der aus dem Lufteinlass 15 kommende Luftstrom 25 von der Trennwand 20 geteilt wird und stromabwärts zwei Teilströme 28 und 29 bildet. Z.B. ist ein Endbereich 30 der Trennwand 20 an einer Längsmittelachse a2 des Luftausströmers 10 am Lufteinlass 15 positioniert. Ein zweiter Endbereich 31 der Trennwand 20 schließt etwa mit einer Innenwandfläche 32 der Blende 16 ab. Der erste Teilstrom 28 verläuft in diesem Fall zwischen dem oberen Bereich 18 der Innenwand 21 und der Seitenfläche 43 der Trennwand 20 zu dem Luftauslass 12 und ein zweiter Teilstrom 29 verläuft zwischen dem unteren Bereich 19 und der Seitenfläche 44 der Trennwand 20 zu dem Luftauslass 13. Mit anderen Worten, aus beiden Luftauslässen 12 und 13 treten die Teilströme 28 und 29 aus.

Gemäß Fig. 3 ist die Trennwand 20 derart angeordnet, dass der Luftauslass 12 verschlossen ist. Der Endbereich 30 der Trennwand 20 ist etwa bündig mit dem oberen Bereich 18 der Innenwand 21 des Gehäuses 17. Der Endbereich 31 ist bündig mit einem unteren Endbereich der Innenwand 32 der Blende 16. Der Luftstrom 25 kann daher lediglich den Luftauslass 13 durchströmen.

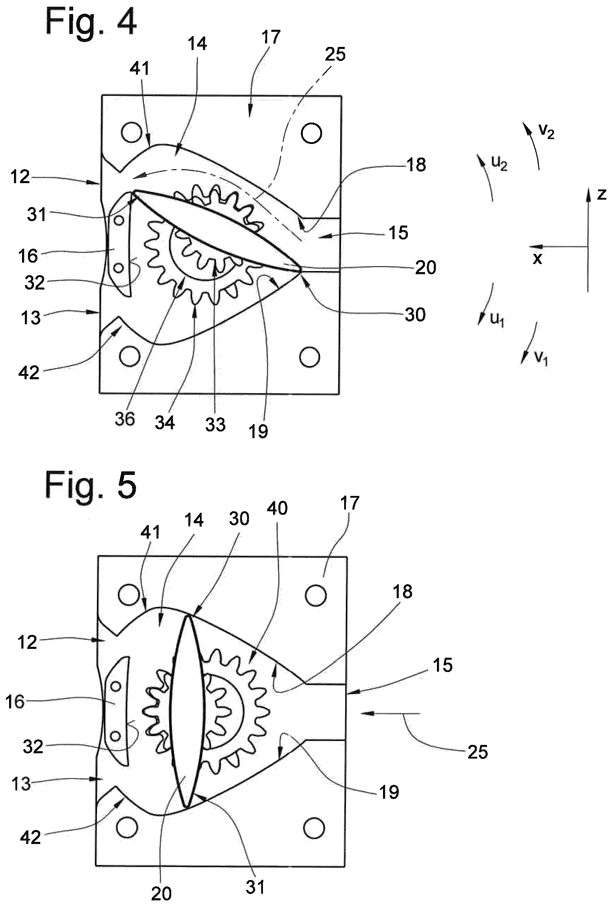

Die Stellung der Trennwand 20 gemäß Fig. 4 ist derart, dass der Luftauslass 13 verschlossen ist. Der gesamte Luftstrom 25 strömt durch den Luftauslass 12. Der Endbereich 30 der Trennwand 20 liegt bündig an einem unteren Bereich 19 der Innenwand 21 , während der Endbereich 31 mit einem oberen Endbereich der Innenwand 32 der Blende 16 abschließt.

Gemäß Fig. 5 schließt der Endbereich 30 mit dem oberen Bereich 18 der Innenwand 21 und der Endbereich 31 mit dem unteren Bereich 19 der Innenwand 21 ab. In diesem Fall tritt aus keinem der Luftauslässe 12 und 13 ein Luftstrom aus. Der Strömungsquerschnitt ist versperrt und der Luftstrom 25 kann die Kammer 14 nicht passieren.

Ein Abschnitt 41 des oberen Bereichs 18 der Kammer 14 weist eine Form auf, die zusammen mit der Form des oberen Bereichs der Blende 16 eine Strömungsrichtung nach schräg unten in Richtung 23 hervorruft. Ein Abschnitt 42 des unteren Bereichs 19 ist derart geformt, dass er zusammen mit der Form eines unteren Bereichs der Blende 16 eine Strömungsrichtung nach schräg oben in Richtung 24 induziert. Der Luftstrom des Luftauslasses 12 ist daher immer in Richtung 23, d.h. nach schräg unten und der Luftstrom des Luftauslasses 13 ist immer in Richtung 24, d.h. nach schräg oben gerichtet. Im Falle von Teilströmen 28 und 29 überlagern sich diese zu einem Luftstrom in Richtung x.

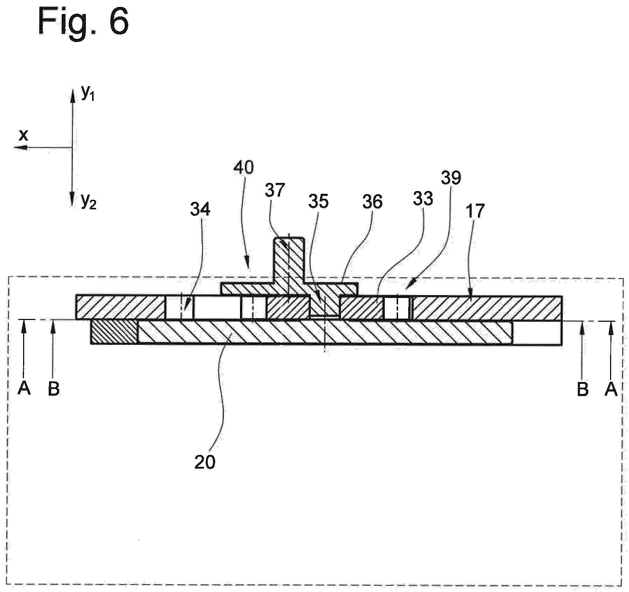

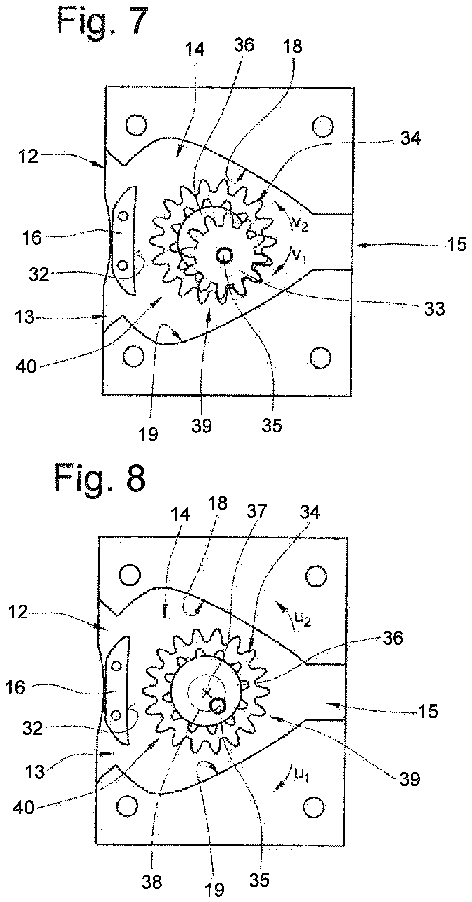

Der Luftausströmer 10 umfasst eine Verstellvorrichtung 40 für die Trennwand 20 mit einem Getriebe 39 (siehe die Fig. 6 bis 8, wobei in den Fig. 7 und 8 die Trennwand 20 nicht dargestellt ist). Das Getriebe 39 umfasst ein Trägerrad 33 mit einer Außenverzahnung, welche mit einer Innenverzahnung eines Hohlrades 34 in Eingriff steht. Das Trägerrad 33 ist fest mit der Trennwand 20 verbunden und relativ zu der Trennwand 20 unbewegbar. Während der Bewegung des Trägerrades 33 in dem Hohlrad 34 bewegt sich eine Exzenterachse 35 auf einer Kreisbahn 38 (siehe Fig. 8). Das Trägerrad 33 ist drehbar auf der Exzenterachse 35 gelagert. Es wird von einem Antriebsrad 36 angetrieben, an welchem die Exzenterachse 35 exzentrisch zu einer Mittelpunktsachse 37 des Antriebsrades 36 angeordnet ist. Die Exzenterachse 35 bildet den Mittelpunkt M der Trennwand 20. Der Antrieb des Antriebsrades 36 ist hier nicht näher dargestellt.

Aus der Position gemäß Fig. 2 dreht das Antriebsrad 36 (das Antriebsrad ist in Fig. 2 ohne Zähne dargestellt) z.B. in Richtung u1, wobei verursacht durch die Drehbewegung der Exzenterachse 35 auf der Kreisbahn 38 das Trägerrad 33 auf der Verzahnung des Hohlrades 34 abrollt und in Richtung v2 um die Exzenterachse 35 dreht, bis die Position gemäß Fig. 3 erreicht ist. Ausgehend von der Position gemäß Fig. 2 kann die Position gemäß Fig. 4 erreicht werden, indem das Antriebsrad 36 z.B. in Richtung u2 dreht, wobei sich das Trägerrad 33 in Richtung v1 bewegt. Die Position der Trennwand 20 gemäß Fig. 5 ist einstellbar, indem ausgehend von der Position gemäß Fig. 3 das Antriebsrad 36 weiter in Richtung u1 oder ausgehend von der Position gemäß Fig. 4 das Antriebsrad 36 in Richtung u2 bewegt wird.

Das Antriebsrad 36 ist z.B. von einem nicht dargestellten Motor angetrieben, welcher in beide Drehrichtungen bewegbar mittels einer Steuerung angesteuert werden kann. Alternativ ist z.B. auch eine manuelle Bewegung des Antriebsrades 36 mittels einer geeigneten Betätigungseinrichtung, z.B. mittels eines manuell um 360° frei drehbaren Bedienrades, möglich, um die unterschiedlichen Stellungen der Trennwand 20 und damit die Art der Luftzuführung einzustellen.

Gemäß einer alternativen, nicht dargestellten Ausführung, weist die Trennwand 20 zusätzlich Leitwände zur seitlichen Ablenkung des Luftstroms in die Richtungen y1 und y2 .

## Patentansprüche

1. Luftausströmer (10) für ein Fahrzeug mit mindestens einem Zuführkanal (15) über welchen Luft zuführbar ist, mit einer Kammer (14) welcher über den Zuführkanal (15) die Luft zuleitbar ist, mit wenigstens einem Luftauslass (12, 13) über welchen die Luft in den Fahrzeuginnenraum strömen kann, wobei wenigstens eine bewegbare Trennwand (20) in der Kammer (14) vorgesehen ist, welche mittels einer Verstellvorrichtung (40) in unterschiedliche Positionen bewegbar ist, derart, dass der Luftstrom wenigstens einem Luftauslass (12, 13) zuführbar ist, **dadurch gekennzeichnet, dass** während sich ein Drehpunkt der Trennwand (20) auf einer Kreisbahn (38) bewegt, die Trennwand (20) gedreht wird.

2. Luftausströmer (10) nach Anspruch 1, **dadurch gekennzeichnet, dass** zusätzlich mit der Trennwand (20) der Strömungsquerschnitt verschließbar ist.

3. Luftausströmer (10) nach einem der vorangehenden Ansprüche,
**dadurch gekennzeichnet, dass** die Trennwand (20) flügelartig geformt ist.

4. Luftausströmer (10) nach einem der vorangehenden Ansprüche,
**dadurch gekennzeichnet, dass** wenigstens eine Blende (16) an dem wenigstens einen Luftauslass (12, 13) angeordnet ist.

5. Luftausströmer (10) nach Anspruch 4, **dadurch gekennzeichnet,**
**dass** wenigstens ein Luftauslass (12, 13) von der Blende (16) und einer die Kammer (14) begrenzenden Wand gebildet ist.

6. Luftausströmer (10) nach Anspruch 5, **dadurch gekennzeichnet,**
**dass** die Blende (16) und die die Kammer (14) begrenzende Wand die Form des Luftauslasses (12, 13) wenigstens teilweise ausbilden.

7. Luftausströmer (10) nach einem der vorangehenden Ansprüche,
**dadurch gekennzeichnet, dass** die Verstellvorrichtung (40) einen Antrieb aufweist.

8. Luftausströmer (10) nach einem der vorangehenden Ansprüche,
**dadurch gekennzeichnet, dass** die Verstellvorrichtung (40) ein Getriebe (39) umfasst.

9. Luftausströmer (10) nach einem der vorangehenden Ansprüche,
**dadurch gekennzeichnet, dass** die Kammer (14) mittels der Trennwand (20) derart unterteilbar ist, dass wenigstens ein Luftauslass (12, 13) versperrt ist, während der Luftstrom wenigstens einem anderen Luftauslass (12, 13) zugeleitet wird.

10. Luftausströmer (10) nach einem der vorangehenden Ansprüche,
**dadurch gekennzeichnet, dass** wenigstens ein Luftauslass (12, 13) derart geformt ist, dass der Luftstrom (25, 28, 29) in eine bestimmte Richtung (23, 24) geleitet wird.

11. Luftausströmer (10) nach einem der vorangehenden Ansprüche,
**dadurch gekennzeichnet, dass** die Ausströmrichtung eines ersten Luftauslasses (12, 13) und die Ausströmrichtung eines zweiten Luftauslasses (12, 13) derart gerichtet sind, dass aufeinandertreffende Luftströme des ersten Luftauslasses und des zweiten Luftauslasses sich zu einer dritten Richtung überlagern.

12. Luftausströmer (10) nach einem der vorangehenden Ansprüche,
**dadurch gekennzeichnet, dass** die Trennwand (20) zu jeder von zwei rechtwinklig aufeinander stehenden Mittelpunktsachsen (a1, a3) symmetrisch ausgebildet ist.

13. Fahrzeuginnenraum, wobei wenigstens ein Bereich der Verkleidung und / oder einer Konsole mit wenigstens einem Luftausströmer (10) nach einem der vorangehenden Ansprüche versehen ist.

14. Fahrzeuginnenraum nach Anspruch 13, **dadurch gekennzeichnet, dass** wenigstens zwei Luftausströmer (10) derart angeordnet sind, dass ihre Luftauslässe (12, 13) miteinander fluchten.

## Claims

1. Air vent (10) for a vehicle having at least one supply channel (15) via which air can be supplied, having a chamber (14), to which the air can be supplied via the supply channel (15), having at least one air outlet (12, 13), via which the air can flow into the vehicle interior, wherein at least one moveable partition wall (20) is provided in the chamber (14), which can be moved to various positions by means of an adjustment device (40) in such a way that the air stream can be supplied to at least one air outlet (12, 13), **characterised in that,** while a pivot point of the partition wall (20) moves on a circular path (38), the partition wall (20) is rotated.

2. Air vent (10) according to claim 1, **characterised in that**, in addition, the flow cross section is sealable with the partition wall (20).

3. Air vent (10) according to one of the preceding claims, **characterised in that** the partition wall (20) is shaped like a wing.

4. Air vent (10) according to one of the preceding claims, **characterised in that** at least one aperture (16) is disposed on the at least one air outlet (12, 13).

5. Air vent (10) according to claim 4, **characterised in that** at least one air outlet (12, 13) is formed by the aperture (16) and by a wall delimiting the chamber (14).

6. Air vent (10) according to claim 5, **characterised in that** the aperture (16) and the wall delimiting the chamber (14) at least partially form the shape of the air outlet (12, 13).

7. Air vent (10) according to one of the preceding claims, **characterised in that** the adjustment device (40) has a drive.

8. Air vent (10) according to one of the preceding claims, **characterised in that** that adjustment device (40) has a transmission (39).

9. Air vent (10) according to one of the preceding claims, **characterised in that** the chamber (14) is divisible by means of the partition wall (20) in such a way that at least one air outlet (12, 13) is blocked while the air stream is supplied to at least one other air outlet (12, 13).

10. Air vent (10) according to one of the preceding claims, **characterised in that** at least one air outlet (12, 13) is formed in such a way that the air stream (25, 28, 29) is guided in a certain direction (23, 24).

11. Air vent (10) according to one of the preceding claims, **characterised in that** the outflow direction of a first air outlet (12, 13) and the outflow direction of a second air outlet (12, 13) are directed in such a way that colliding air streams of the first air outlet and the second air outlet merge in a third direction.

12. Air vent (10) according to one of the preceding claims, **characterised in that** the partition wall (20) is designed to be formed symmetrically relative to each of two perpendicular central axes.

13. Vehicle interior, wherein at least one area of the panelling and/or console is provided with at least one air vent (10) according to one of the preceding claims.

14. Vehicle interior according to claim 13, **characterised in that** at least two air vents (10) are disposed in such a way that their air outlets (12, 13) align with each other.

## Revendications

1. Diffuseur d'air (10) pour un véhicule, comportant au moins un canal d'alimentation (15) par lequel de l'air peut être acheminé, une chambre (14) dans laquelle l'air peut être acheminé par le canal d'alimentation (15), au moins une sortie d'air (12, 13) par laquelle l'air peut diffuser dans l'habitacle du véhicule, au moins une cloison mobile (20) étant prévue dans la chambre (14), laquelle peut être déplacée dans différentes positions à l'aide d'un dispositif de réglage (40), de telle sorte que le flux d'air peut être acheminé vers au moins une sortie d'air (12, 13), **caractérisé en ce que** la cloison (20) est tournée pendant qu'un point d'articulation de la cloison (20) se déplace sur une trajectoire circulaire (38).

2. Diffuseur d'air (10) selon la revendication 1, **caractérisé en ce que** la section transversale d'écoulement peut en outre être fermée à l'aide de la cloison (20).

3. Diffuseur d'air (10) selon l'une des revendications précédentes, **caractérisé en ce que** la cloison (20) est en forme d'ailette.

4. Diffuseur d'air (10) selon l'une des revendications précédentes, **caractérisé en ce qu'**au moins un déflecteur (16) est disposé sur la au moins une sortie d'air (12, 13).

5. Diffuseur d'air (10) selon la revendication 4, **caractérisé en ce qu'**au moins une sortie d'air (12, 13) est formée par le déflecteur (16) et une paroi délimitant la chambre (14).

6. Diffuseur d'air (10) selon la revendication 5, **caractérisé en ce que** le déflecteur (16) et la paroi délimitant la chambre (14) forment au moins en partie la forme de la sortie d'air (12, 13).

7. Diffuseur d'air (10) selon l'une des revendications précédentes, **caractérisé en ce que** le dispositif de réglage (40) comporte un entraînement.

8. Diffuseur d'air (10) selon l'une des revendications précédentes, **caractérisé en ce que** le dispositif de réglage (40) comprend un engrenage (39).

9. Diffuseur d'air (10) selon l'une des revendications précédentes, **caractérisé en ce que** la chambre (14) peut être divisée au moyen de la cloison (20) de telle sorte qu'au moins une sortie d'air (12, 13) est obstruée, tandis que le flux d'air est dirigé vers au moins une autre sortie d'air (12, 13).

10. Diffuseur d'air (10) selon l'une des revendications précédentes, **caractérisé en ce qu'**au moins une sortie d'air (12, 13) est formée de telle sorte que le flux d'air (25, 28, 29) est dirigé dans une direction déterminée (23, 24).

11. Diffuseur d'air (10) selon l'une des revendications précédentes, **caractérisé en ce que** la direction d'écoulement d'une première sortie d'air (12, 13) et la direction d'écoulement d'une deuxième sortie d'air (12, 13) sont orientées de telle sorte que les flux d'air convergents de la première sortie d'air et de la deuxième sortie d'air se superposent dans une troisième direction.

12. Diffuseur d'air (10) selon l'une des revendications précédentes, **caractérisé en ce que** la cloison (20) est symétrique par rapport à chacun des deux axes centraux (a1, a3) perpendiculaires l'un à l'autre.

13. Habitacle de véhicule, dans lequel au moins une partie du revêtement et/ou d'une console est équipée d'au moins un diffuseur d'air (10) selon l'une des revendications précédentes.

14. Habitacle de véhicule selon la revendication 13, **caractérisé en ce qu'**au moins deux diffuseurs d'air (10) sont disposés de telle sorte que leurs sorties d'air (12, 13) soient alignées les unes avec les autres.
